# EUROPEAN PATENT SPECIFICATION

(11) **EP 4 605 897 B1**
(45) Date of publication and mention of the grant of the patent: **08.07.2026**
(21) Application number: 23787070.4
(22) Date of filing: 08.10.2023
(51) Int. Cl.: G06T 17/00

(54) **THREE-DIMENSIONAL CORONARY TREE RECONSTRUCTION**
DREIDIMENSIONALE REKONSTRUKTION DES KORONARBAUMS
RECONSTRUCTION TRIDIMENSIONNELLE D'ARBRE ARTÉRIEL CORONAIRE

(30) Priority: 20.10.2022 RU 2022127310
(43) Date of publication of application: 27.08.2025
(73) Proprietor: Koninklijke Philips N.V., 5656 AE Eindhoven (NL)
(72) Inventor: BUERGER, Christian, 5656 AG Eindhoven (NL); JOSHI, Mukta, 5656 AG Eindhoven (NL); WISSEL, Tobias, 5656 AG Eindhoven (NL); BARAGONA, Marco, 5656 AG Eindhoven (NL); BRESCH, Erik, 5656AG Eindhoven (NL); KOLOKOLNIKOV, Georgii, 5656 AG Eindhoven (NL); POLIAKOV, Andrei, 5656 AG Eindhoven (NL); OLIVAN BESCOS, Javier, 5656 AG Eindhoven (NL)
(74) Representative: Philips Intellectual Property & Standards
(86) International application number: PCT/EP2023/077811
(87) International publication number: WO 2024/083538

(56) References cited:
- WO-A1-2017/114700
- EDUARD SERRADELL ET AL: "Simultaneous correspondence and non-rigid 3D reconstruction of the coronary tree from single X-ray images", COMPUTER VISION (ICCV), 2011 IEEE INTERNATIONAL CONFERENCE ON, IEEE, 6 November 2011 (2011-11-06), pages 850 - 857, XP032101278, ISBN: 978-1-4577-1101-5, DOI: 10.1109/ICCV.2011.6126325

## Description

### BACKGROUND

Two-dimensional angiography imaging is commonly used to visualize the blood vessels of human hearts and to check the quality of blood supply of the human hearts. Two-dimensional angiography imaging allows acquisitions of images with high spatial and temporal resolution. Two-dimensional angiography imaging also enables real time guidance during cardiac interventions. In two-dimensional X-ray imaging, the heart and coronary tree are projected onto a two-dimensional plane. However, the two-dimensional nature of the visualization may limit characterization of the desired vessel or lesion due to occlusions, vessel overlap, foreshortening, cardiac motion, and/or lung motion. Hence, the interpretation of two-dimensional angiography images shows large inter-user variabilities.

Alternative imaging techniques are also available for angiography imaging. One such alternative imaging technique is three-dimensional computed tomography angiography (CTA) imaging, which can reduce the inter-user interpretation variability. The improvement is due to the three-dimensional nature of the imaging data. Compared to imaging data from two-dimensional angiography imaging, the imaging data from three-dimensional computed tomography angiography is easier to interpret, more suitable for computing hemodynamic measurements, and more accurate for diagnosing coronary diseases and detecting lesions. However, compared to two-dimensional angiography imaging, three-dimensional computed tomography angiography imaging also commonly involves longer scan times and an increase of radiation exposure to the patient.

Hence, to combine the benefit from three-dimensional image interpretation, much research has been conducted for generating a three-dimensional reconstruction of the coronary tree from multiple two-dimensional angiogram images. To date, research on generating three-dimensional reconstructions of the coronary tree consistently requires X-ray views from at least two different positions/orientations of the X-ray device. In other words, two-dimensional coronary angiogram images must be acquired from at least two position and orientation viewpoints of an X-ray device, such as a C arm X-ray device. Using branching point and vessel detection methods, followed by matching this information from the different viewpoints, a three-dimensional reconstruction of the coronary tree may be generated to more easily interpret for diagnostic purposes. However, acquiring two-dimensional angiogram images from multiple viewpoints increases radiation dose and acquisition times. D1(WO 2017/114700 A1, KONINKLIJKE PHILIPS NV, 6 July 2017) exemplifies an apparatus for providing a patient specific 3D model of a body part, wherein at least one 2D X-ray image comprising 2D X-ray image data of a vascular structure of a patient's body part is provided. A 3D model of the body part is provided, the 3D model comprising a 3D modelled vascular structure, wherein at least one parameter commands an appearance of the 3D modelled vascular structure. The 3D modelled vascular structure is confronted with the 2D X-ray image data of the vascular structure to determine the at least one parameter. The 3D model is updated as a function of the determined at least one parameter. A medical report is generated based on information determined from the 3D model.

### SUMMARY

The present invention is about a controller, a storage medium, a method for generating a three dimensional image of a coronary tree, as in appended claims.

### BRIEF DESCRIPTION OF THE DRAWINGS

The example embodiments are best understood from the following detailed description when read with the accompanying drawing figures. It is emphasized that the various features are not necessarily drawn to scale. In fact, the dimensions may be arbitrarily increased or decreased for clarity of discussion. Wherever applicable and practical, like reference numerals refer to like elements.
FIG. 1 illustrates a system for three-dimensional coronary tree reconstruction, in accordance with an example embodiment.
FIG. 2A illustrates a sequence of two-dimensional angiogram images of a coronary tree from a single viewpoint of an imaging device, in accordance with an example embodiment.
FIG. 2B illustrates orientations of the coronary tree at each position in a sequence of two-dimensional angiogram images, in accordance with an example embodiment.
FIG. 3 illustrates another sequence of two-dimensional angiogram images of a coronary tree from a single viewpoint of an imaging device, in accordance with an example embodiment.
FIG. 4 illustrates a reconstruction of a three-dimensional coronary tree from multiple two-dimensional angiogram images, in accordance with an example embodiment.
FIG. 5 illustrates another reconstruction of a three-dimensional coronary tree from multiple two-dimensional angiogram images, in accordance with an example embodiment.
FIG. 6 illustrates another reconstruction of a three-dimensional coronary tree from multiple two-dimensional angiogram images, in accordance with a representative embodiment.
FIG. 7 illustrates a method for three-dimensional coronary tree reconstruction, in accordance with an example embodiment.
FIG. 8 illustrates a computer system, on which a method for three-dimensional coronary tree reconstruction is implemented, in accordance with another example embodiment.

### DETAILED DESCRIPTION

In the following detailed description, for the purposes of explanation and not limitation, representative embodiments disclosing specific details are set forth in order to provide a thorough understanding of embodiments according to the present teachings. However, other embodiments consistent with the present disclosure that depart from specific details disclosed herein remain within the scope of the appended claims. Descriptions of known systems, devices, materials, methods of operation and methods of manufacture may be omitted so as to avoid obscuring the description of the representative embodiments. Nonetheless, systems, devices, materials and methods that are within the purview of one of ordinary skill in the art are within the scope of the present teachings and may be used in accordance with the representative embodiments. It is to be understood that the terminology used herein is for purposes of describing particular embodiments only and is not intended to be limiting. Definitions and explanations for terms herein are in addition to the technical and scientific meanings of the terms as commonly understood and accepted in the technical field of the present teachings.

It will be understood that, although the terms first, second, third etc. may be used herein to describe various elements or components, these elements or components should not be limited by these terms. These terms are only used to distinguish one element or component from another element or component. Thus, a first element or component discussed below could be termed a second element or component without departing from the teachings of the inventive concept.

As used in the specification and appended claims, the singular forms of terms 'a', 'an' and 'the' are intended to include both singular and plural forms, unless the context clearly dictates otherwise. Additionally, the terms "comprises", and/or "comprising," and/or similar terms when used in this specification, specify the presence of stated features, elements, and/or components, but do not preclude the presence or addition of one or more other features, elements, components, and/or groups thereof. As used herein, the term "and/or" includes any and all combinations of one or more of the associated listed items.

Unless otherwise noted, when an element or component is said to be "connected to", "coupled to", or "adjacent to" another element or component, it will be understood that the element or component can be directly connected or coupled to the other element or component, or intervening elements or components may be present. That is, these and similar terms encompass cases where one or more intermediate elements or components may be employed to connect two elements or components. However, when an element or component is said to be "directly connected" to another element or component, this encompasses only cases where the two elements or components are connected to each other without any intermediate or intervening elements or components.

The present disclosure, through one or more of its various aspects, embodiments and/or specific features or sub-components, is thus intended to bring out one or more of the advantages as specifically noted below.

Embodiments described herein reconstruct a three-dimensional coronary tree of a coronary structure from a sequence of two-dimensional angiogram images of the coronary structure acquired from a single acquisition position (i.e., a single viewpoint) of an imaging device (e.g., C-arm). By reconstructing the three-dimensional coronary tree from the images acquired from a single viewpoint of the imaging device, these embodiments may reduce scan time and radiation exposure to a patient during a medical procedure. These embodiments may use cardiac motion of the coronary structure, for example, the torsion of the heart in a cardiac cycle from end-systole to end-diastole, to simulate different viewpoints of the coronary structure from the images acquired from the single viewpoint (i.e., allowing the X-ray device to remain static at a single acquisition position). These embodiments may use the different simulated viewpoints to reconstruct the three-dimensional coronary tree of the coronary structures. In some embodiments, a machine-learning model, such as a neural network, may be trained to receive as input the two-dimensional angiogram images of the coronary structure acquired from a single viewpoint of the imaging device, simulate different viewpoints of a coronary structure from the two-dimensional angiogram images based on the cardiac motion of the coronary structure, reconstruct the three-dimensional coronary tree from the simulated different viewpoints, and output the reconstructed three-dimensional coronary tree.

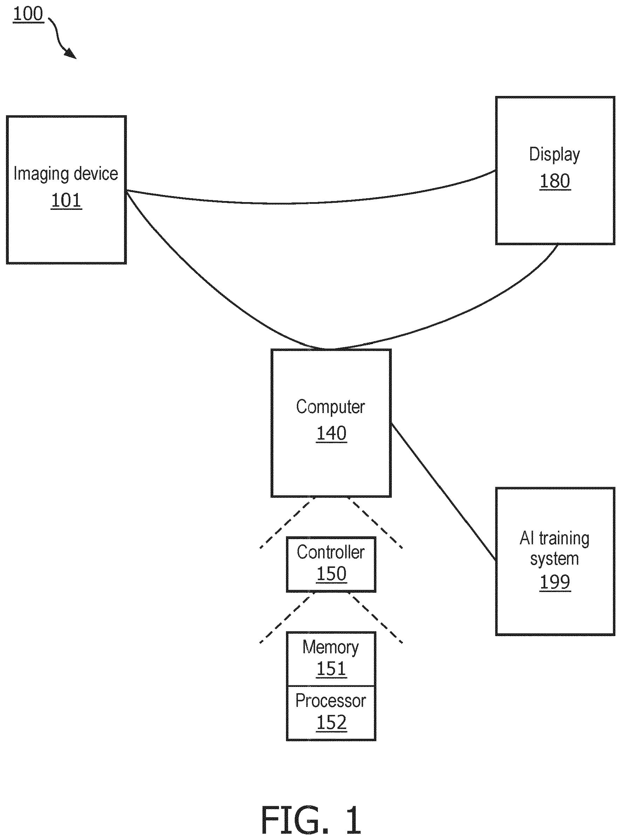

FIG. 1 illustrates a system 100 for three-dimensional coronary tree reconstruction, in accordance with an example embodiment.

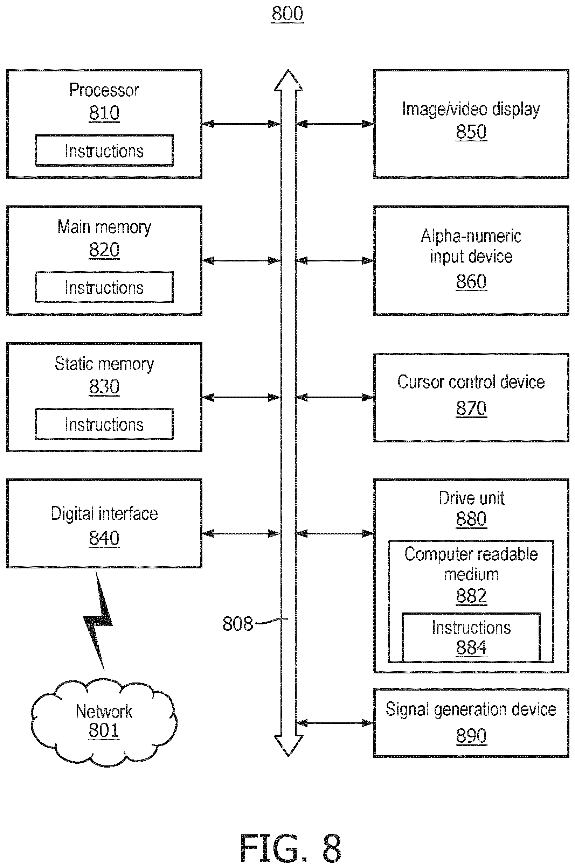

The system 100 in FIG. 1 includes an imaging system 101, a computer 140, a display 180, and an AI training system 199. The computer 140 includes a controller 150, and the controller 150 includes at least a memory 151 that stores instructions and a processor 152 that executes the instructions. A computer that can be used to implement the controller 150 is depicted in FIG. 8, though a controller 150 may include more or less elements than depicted in FIG. 1 or FIG. 8. In some embodiments, multiple different elements of the system 100 in FIG. 1 may include a computer such as the computer 140 and/or a controller such as the controller 150.

The imaging system 101 may be an X-ray system that includes an X-ray device and one or more detectors. The imaging system 101 is configured to capture two-dimensional angiogram images of a coronary tree corresponding to a moving coronary structure (e.g., heart) from a single viewpoint of the X-ray device. In some embodiments, the X-ray device may be a C-arm X-ray device. The imaging system 101 may include other elements, such as a control system with a memory that stores instructions and a processor that executes the instructions, along with interfaces, such as a user interface that allows a user to input instructions and/or a display that displays interactive instructions and feedback for the user.

In some embodiments, the imaging system 101 is configured to acquire two-dimensional angiogram images, for example over a complete cardiac cycle from end-diastole (ED) to end-systole (ES). In other embodiments, the imaging system 101 is configured to acquire the two-dimensional angiogram images from less than one entire cardiac cycle and for construction the three-dimensional coronary tree consistent with the teachings herein. In some other embodiments, the imaging system 101 is configured to acquire two-dimensional angiogram images from more than one cardiac cycle for reconstruction the three-dimensional coronary tree consistent with the teachings herein. In some embodiments, the two-dimensional angiogram images shows a clear delineation of the coronary tree by the use of a contrast injection when acquiring the images. The imaging system 101 is configured to acquire the two-dimensional angiogram images from a single viewpoint (position and orientation) of the imaging system 101.

The computer 140 and/or the controller 150 may include interfaces, such as a first interface, a second interface, a third interface, and a fourth interface. One or more of the interfaces may include ports, disk drives, wireless antennas, or other types of receiver circuitry that connect the computer 140 and/or the controller 150 to other electronic elements. One or more of the interfaces may also include user interfaces such as buttons, keys, a mouse, a microphone, a speaker, a display separate from the display 180, or other elements that users can use to interact with the computer 140 and/or the controller 150 such as to enter instructions and receive output. The computer 140 may be provided with the imaging system 101, or may receive the two-dimensional angiogram images from the imaging system 101 over a communication network such as the internet.

The controller 150 may perform some of the operations described herein directly and may implement other operations described herein indirectly. For example, the controller 150 may indirectly control operations such as by generating and transmitting content to be displayed on the display 180. The controller 150 may directly control other operations such as logical operations performed by the processor 152 executing instructions from the memory 151 based on input received from electronic elements and/or users via the interfaces. Accordingly, the processes implemented by the controller 150 when the processor 152 executes instructions from the memory 151 may include steps not directly performed by the controller 150.

The controller 150 may apply a trained machine-learning model, such as a neural network, for reconstruction of the three-dimensional coronary tree. For example, the processor 152 or another processor may execute software instructions to implement the functions of the trained machine learning model herein. The machine-learning model may receive as input a sequence of two-dimensional angiogram images of the coronary structure acquired from a single viewpoint of the imaging device and over at least part of a cardiac motion cycle from end-diastole (ED) to end-systole (ES). The machine-learning model is trained to simulate different viewpoints of a coronary structure from the two-dimensional angiogram images based on the cardiac motion, reconstruct the three-dimensional coronary tree from the simulated different viewpoints and output the reconstructed three-dimensional coronary tree. In some embodiments, the trained machine learning model may use a reference model of the coronary structure or coronary tree and estimate three-dimensional transformations or deformation vector fields that deform the reference model based on the cardiac motion to generate the three-dimensional representation of the coronary tree as a patient-specific three-dimensional representation.

In some embodiments, the trained machine-learning model may output a depth map comprising a pixel-by-pixel depth image for generating the reconstructed three-dimensional image of a coronary tree. In some embodiments, the trained machine learning model may output or cause the computer 140 to output the three-dimensional coronary tree as a volumetric reconstruction voxel-by-voxel for a selected frame.

The controller 150 of the computer 140 may store software in the memory 151 for execution by the processor 152. The software may include instructions for implementing the trained machine learning model, and may be used to reconstruct the three-dimensional coronary tree from a single image acquisition viewpoint.

The display 180 may be local to the controller 150 or may be remotely connected to the controller 150. The display 180 may be connected to the controller 150 via a local wired interface such as an Ethernet cable or via a local wireless interface such as a Wi-Fi connection. The display 180 may be interfaced with other user input devices by which users can input instructions, including mouses, keyboards, thumbwheels and so on. The display 180 may be a monitor such as a computer monitor, a display on a mobile device, an augmented reality display, a television, an electronic whiteboard, or another screen configured to display electronic imagery. The display 180 may also include one or more input interface(s) such as those noted above that may connect to other elements or components, as well as an interactive touch screen configured to display prompts to users and collect touch input from users.

Using the system 100 in FIG. 1, reconstruction of a three-dimensional coronary tree avoids limitations posed by solely relying on two-dimensional imaging, such as vessel/lesion overlap or foreshortening and impacts due to cardiac and lung motion, and without imposing radiation exposure on the patient from three-dimensional X-ray imaging. As described herein, the coronary tree may be constructed from only a single C-arm acquisition viewpoint, and this also results in efficiencies such as reduced scan time.

The AI training system 199 includes trained machine learning model consistent with the teachings herein. The AI training system 199 may be provided by the same entity or system that provides the computer 140 and the display 180, or may be a third-party service that trains machine learning models on behalf of a plurality of entities. A processor may be configured to train the machine-learning model by receiving, as input, sets of previous two-dimensional angiogram image sequences of a coronary structure. Each previous set may correspond to images acquired over a cardiac cycle of the coronary structure. Each set corresponds to a known (ground truth) three-dimensional representation of the coronary tree. The processor may train the machine-learning model based on correlating features of the previous two-dimensional images and the corresponding ground-truth three-dimensional images. The processor may also receive as input the viewpoint (e.g., positions and orientations) of the imaging system when acquiring the previous images of each set. For some sets of the previous images, the previous images may be acquired from a single viewpoint of the imaging device and, for some sets of the previous images, the previous images may be acquired from at least two different viewpoints of the imaging device. In some embodiments, from the input and ground truth, the processor may train the machine-learning model to determine a correspondence between changes in an image view of a coronary tree due to rotational movement of the imaging device and changes in the image view of the coronary tree due to rotation caused by the torsion of the heart. In these embodiments, the model may be trained to apply such relationship to the views in an image acquired at a particular point in the cardiac cycle to generated further image views that simulate the rotation of the imaging device to different viewpoints. In some embodiments, the machine learning model is trained to include a reference model of the coronary structure or coronary tree and to estimate three-dimensional transformations or deformation vector fields that deform the reference model based on the cardiac motion over the cardiac cycle.

The system 100 is configured to perform a process when the processor 152 executes instructions from the memory 151. For example, the system 100 may be configured to obtain a sequence of two-dimensional angiogram images corresponding to a moving coronary structure (e.g., heart) from a single viewpoint of an imaging device. The system 100 is further configured to generate (e.g., using the trained machine learning model), a three-dimensional representation of the coronary tree of the coronary structure based on the sequence of the two-dimensional angiogram images and the motion of the moving coronary structure. In some embodiments, the system selects a reference frame from the sequence of two-dimensional angiogram images (e.g., the first frame in the sequence of two-dimensional images) and reconstructs the three-dimensional representation of the coronary tree (from the sequence of the two-dimensional angiogram images from the single viewpoint and the motion of the moving coronary structure) with respect to the selected reference frame. In some embodiment, the system 100 may generate the three-dimensional representation of the coronary tree while the two-dimensional angiogram images are being captured by the imaging system.

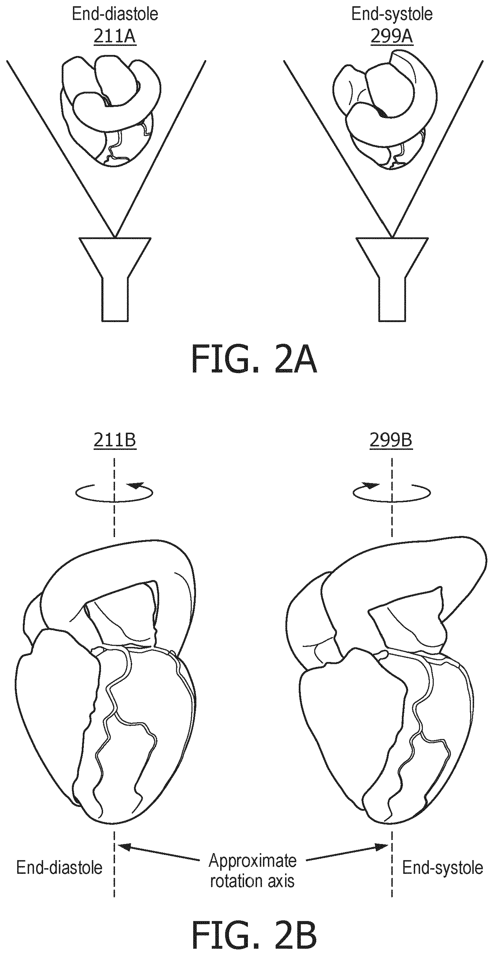

FIG. 2A illustrates a sequence of two-dimensional angiogram images of a coronary tree from a single viewpoint of an imaging device, in accordance with a representative embodiment.

In FIG. 2A, the three-dimensional representation 211A is captured at the end-diastole and the three-dimensional representation 299A is captured at the end-systole. The two-dimensional angiogram images captured from the end-diastole and the end-systole and any other parts of the cardiac cycle are captured from a single viewpoint corresponding to a single acquisition position of the imaging system 101 in FIG. 1. The two-dimensional angiogram images may be obtained by the computer 140 from the imaging system 101, and used to generate one or both of the three-dimensional representation 211A and the three-dimensional representation 299A. In some embodiments, a single reference frame is used as the basis for generating a three-dimensional representation of the coronary tree based on underlying motion of the heart and coronary tree as reflected in the sequence of two-dimensional angiogram images. In some embodiments, the single reference frame may be the frame for the end-diastole, and a stack of the two-dimensional angiogram images may include frames for an entire cardiac cycle including the frame for the end-diastole.

In FIG. 2A, a single viewpoint of the imaging device is used to capture images corresponding to cardiac motion from end-diastole to end-systole (ES). The resultant set of two-dimensional angiogram images includes information that can be used to effectively mimic the views of the coronary tree that would be captured by moving the imaging device to different viewpoints. In some embodiments, a model detects the torsion of the heart (approximate rotation around the heart axis) and uses the torsion to derive a full three-dimensional representation of the coronary tree as if the representation was derived from images from multiple different C-arm acquisition positions, even though the views are all from the single C arm acquisition position. This avoids the necessity of acquiring images from more than one viewpoint and reduces scan time and exposure of radiation onto the patient.

In some embodiments consistent with FIG. 2A, visible vessels of the coronary tree in the images may be segmented and labelled, such by using a segmentation/labelling algorithm. In some embodiments, motion models of the heart may be used to model the motion path from end-diastole to ES. The motion models may use the segmented and labelled vessels. The motion models of the heart may be three-dimensional rigid, three-dimensional affine, or even more complex motion models of the heart. The motion models may estimate torsion of the visible coronary tree during heart motion between end-diastole and end-systole. In other words, the rotation of some or all points on the coronary tree during cardiac motion may be estimated by the motion models. These point-wise rotation estimates of the coronary tree mimic different viewpoints of the C-arm device on a point-wise basis. The motion models may use the mimicked different viewpoints to reconstruct a three-dimensional coronary tree from the local viewpoint variations (such as in the acquired sequence of two-dimensional images from the single viewpoint of the imaging system). The reconstructed three-dimensional coronary tree and any or all of the two-dimensional angiogram images may be displayed on the display 180.

FIG. 2B illustrates orientations of the coronary tree at each position in a sequence of two-dimensional angiogram images, in accordance with a representative embodiment.

In FIG. 2B, the three-dimensional representation 211B is captured at the end-diastole, and the three-dimensional representation 299B is captured at the end-systole. In FIG. 2B, the three-dimensional anatomical torsion of the heart during cardiac motion is illustrated by a local rotation at the three-dimensional representation 299B. As should be evident, the coronary tree follows the anatomical torsion of the heart throughout the cardiac cycle.

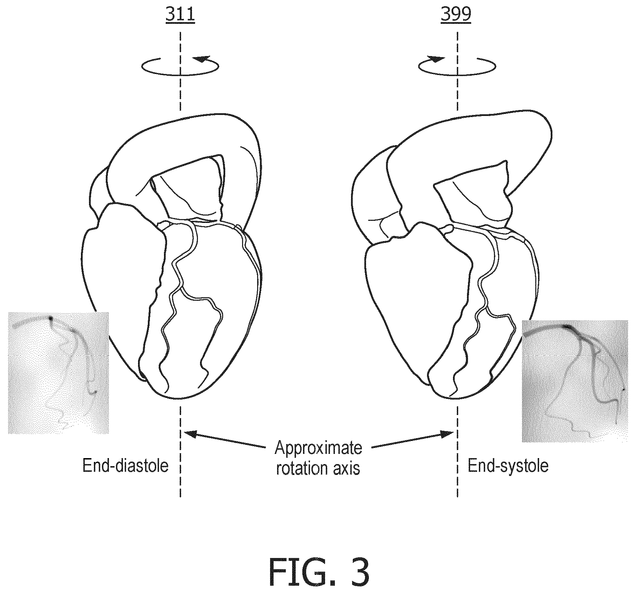

FIG. 3 illustrates another sequence of two-dimensional angiogram images of a coronary tree from a single viewpoint of an imaging device, in accordance with a representative embodiment.

As explained herein, a three-dimensional reconstruction at a specific cardiac phase may be realized from a single imaging system (e.g., C-arm) viewpoint. In FIG. 3, two three-dimensional representations of a coronary tree are shown, one at the end-diastole and one at the end-systole. In FIG. 3, a corresponding two-dimensional angiogram image is provided for each of the three-dimensional representations. The end-diastole three-dimensional representation 311 is shown on the left and the end-systole three-dimensional representation 399 is shown on the right. As shown for the end-diastole three-dimensional representation 311, the rotation may be counterclockwise, such as about an approximate rotation axis, and for the end-systole three-dimensional representation 399, the rotation may be clockwise, again such as about the approximate rotation axis.

In FIG. 3, two-dimensional angiogram images of the human heart are taken from a single static viewpoint of a C-arm position while cardiac motion is present. A three-dimensional rendering of the heart is provided along with a simulated projection of the coronary tree as projected onto a two-dimensional detector plane for each two-dimensional angiogram image. As can be observed from direct comparison of the left and the right in FIG. 3, torsion of the heart is seen corresponding to the rotational motion of the heart about the approximate rotation axis. The torsion of the heart includes an approximate rotation of the left myocardium around the heart axis, and is shown for end-diastole (on the left) to end-systole (on the right). Observing the cardiac motion in FIG. 3, the orientation of the coronary tree towards the X-ray system changes over the cardiac cycle. In embodiments, a machine learning model is trained to relate the changes in the image view of the coronary structure due to rotational movement of the imaging device to changes in the image view of the coronary structure due to rotation caused by the torsion of the heart. The model may apply such changes in the image view due to rotation caused by the torsion to input images from a single C-arm viewpoint to simulate different image views of the coronary structure. The model uses the simulated image views to generate the three-dimensional reconstruction of the coronary tree. In other words, for the two-dimensional angiogram images in FIG. 3, the C-arm is not changing the viewpoint, but the model using the torsion of the heart leads to simulate changes in relative viewpoints.

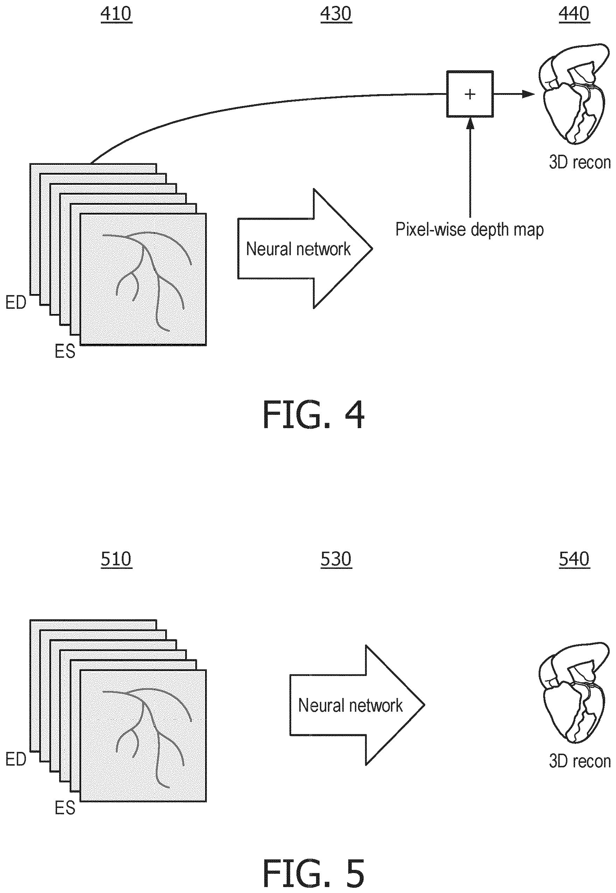

FIG. 4 illustrates a reconstruction of a three-dimensional coronary tree from multiple two-dimensional angiogram images, in accordance with a representative embodiment.

In embodiments based on FIG. 4, a pixel-wise depth map may be generated for a selected reference frame based on the input of a stack of two-dimensional angiogram images. This allows reconstruction of a three-dimensional model of the coronary tree as a two-dimensional coronary tree supplemented with a depth map, but from a single viewpoint. The reconstruction based on two-dimensional angiogram images from a single viewpoint may reduce scan time and radiation exposure to the patient. The pixel-wise depth map may be generated based on distance/depth values from the acquisition device to the anatomical structures, e.g., the coronary tree. Using the distance/depth values, the two-dimensional X-ray image may be transformed into a three-dimensional image because each pixel is provided a vector for distance-to-acquisition-device.

In FIG. 4, a machine learning model 430 may reconstruct a coronary tree 449 via a depth map. The machine learning model 430 in FIG. 4 is a trained neural network. The embodiment of FIG. 4 may be considered an option in which a machine learning model 430 implicitly reconstructs the three-dimensional coronary tree reconstruction 440. The implicit reconstruction may be taken to mean that the machine learning model 430 does not compute the explicit transformation from frame to frame, and instead relies, for example, on a heart model and coronary tree segmentations from three-dimensional computed tomography angiography data. In FIG. 4, a large set of two-dimensional angiogram images 410 from a single viewpoint may be used to allow estimation of the three-dimensional coronary tree reconstruction 440. The estimation may comprise predictions of a map of pixel depths for each pixel by the machine learning model 430. In FIG. 4, the set of two-dimensional angiogram images 410 are input to a neural network model as the machine learning model 430, and the neural network model outputs the pixel-wise depth map which is combined with the selected reference frame to result in the three-dimensional coronary tree. The pixel-wise depth map may comprise a pixel-by-pixel depth image which adds depth information to a projection image from a selected frame. The selected frame may be the first frame for a cardiac cycle, or may be a subsequent frame.

The set of two-dimensional angiogram images 410 that match the respective three-dimensional information over multiple cardiac phases may be required to estimate the three-dimensional coronary tree reconstruction 440. Three-dimensional information of interest used to predict the pixel depth maps for each pixel may include a heart model and coronary tree segmentations from three-dimensional computed tomography angiography data. The pairs of two-dimensional angiogram images and three-dimensional angiogram image may be generated in several different ways. One way to generate such pairs is by generating simulated coronary angiography data from three-dimensional heart / coronary tree segmentations, as this allows generation of a large amount of training data. One example of two-dimensional to three-dimensional matched data was shown in FIG. 3. Another way to generate such pairs is by matching acquisition-specific projections of the three-dimensional computed tomography angiography data with acquired X-ray images.

In FIG. 4, a machine learning model 430 is used to reconstruct a three-dimensional coronary tree from multiple two-dimensional X-ray angiogram images. The machine learning model 430 takes the stack of angiogram images (sorted from end-diastole to end-systole) as input. The machine learning model 430 outputs a pixel-wise depth map with respect to a reference frame. For example, the first reference frame may be used as the basis to build the three-dimensional model, though subsequent reference frames may alternatively be used as the basis. In some embodiments, multiple reference frames may be used as the basis for a three-dimensional model. The combination of two-dimensional reference frame and depth map represents the three-dimensional reconstruction of the coronary tree with respect to the reference frame.

Given the two-dimensional to three-dimensional pairs (images and respective two-dimensional/three-dimensional vessel segmentations), the three-dimensional shapes may be reconstructed by the machine learning model 430 using an artificial intelligence (AI) approach. Given the set of two-dimensional angiogram images over the cardiac cycle and the matching three-dimensional heart model and coronary tree shapes per cardiac phase, the machine learning model 430 takes the series of two-dimensional angiogram images as input and outputs the desired three-dimensional reconstruction of the heart (e.g., the coronary tree). In some embodiments, three-dimensional depth maps may be estimated for a given two-dimensional input image, and the output three-dimensional map may be based on pixel-wise depth information. In some embodiments, a stack of two or more two-dimensional angiogram images may be input to the machine learning model 430, sorted from end-diastole to end-systole. Given the two-dimensional to three-dimensional pairs and hence a ground truth of depth information per X-ray image, the machine learning model 430 may be trained to deliver a depth map for a selected reference frame. e.g., the first one. In other words, the machine learning model 430 may output a pixel-by-pixel depth image which adds depth information to the projection image and hence converts the reference two-dimensional image to three-dimensional space. This finally results in the desired three-dimensional reconstruction of a coronary tree, as a two-dimensional image supplemented with artificial intelligence-based depth estimation as shown in FIG. 4.

FIG. 5 illustrates another reconstruction of a three-dimensional coronary tree from multiple two-dimensional angiogram images, in accordance with a representative embodiment.

FIG. 5 illustrates an embodiment in which a machine learning model 530 may reconstruct a coronary tree directly in a three-dimensional space, such as by using three-dimensional voxel occupancy maps. In FIG. 5, the machine learning model 530 is a neural network. The embodiment of FIG. 5 may be considered a second implicit option in which a machine learning model 530 reconstructs a coronary tree as a three-dimensional reconstruction 540. As noted above with respect to FIG. 4, given two-dimensional to three-dimensional pairs of images and respective two-dimensional/three-dimensional vessel segmentations, the three-dimensional representation of the coronary tree 550 may be reconstructed using an artificial intelligence (AI) approach to produce the three-dimensional reconstruction 540. In FIG. 5, the set of two-dimensional angiogram images 510 are input to a neural network model as the machine learning model 530, and the neural network model directly outputs the three-dimensional coronary tree 530 as a direct volumetric reconstruction of the coronary tree. For example, the output of the neural network in FIG. 5 may be a pixel-wise output over a predefined field of view. The machine learning model 530 may output the three-dimensional coronary tree as a volumetric reconstruction voxel-by-voxel for a selected frame.

Given the set of two-dimensional angiogram images over the cardiac cycle and the matching three-dimensional heart model and coronary tree shapes per cardiac phase, the machine-learning model may be trained by taking the series of two-dimensional angiogram images as input and outputting the desired three-dimensional reconstruction 540 of the heart (e.g., the coronary tree). In FIG. 5, another artificial intelligence-based reconstruction of a three-dimensional coronary tree from multiple two-dimensional X-ray angiogram images is shown. The machine learning model takes the stack of angiogram images (sorted from end-diastole to end-systole) as input. Another example of two-dimensional to three-dimensional matched data is shown in FIG. 5. In FIG. 5, a direct volumetric reconstruction of the coronary tree, e.g., as pixel-wise output over a predefined field of view, is shown.

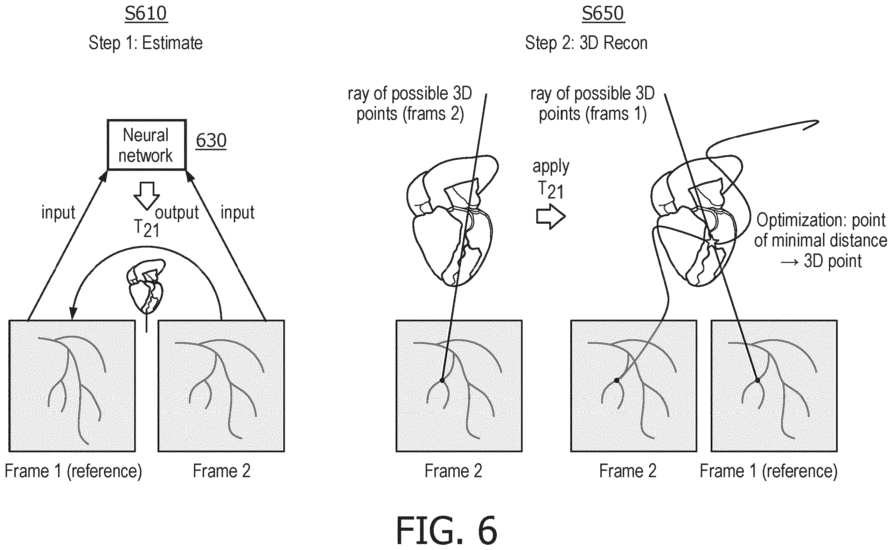

FIG. 6 illustrates another reconstruction of a three-dimensional coronary tree from multiple two-dimensional angiogram images, in accordance with a representative embodiment.

FIG. 6 illustrates an embodiment in which a machine learning model may explicitly reconstruct a coronary tree directly in a three-dimensional space. In the embodiment of FIG. 6, the neural network 630 estimates rotational transformations based on input of multiple frames of angiogram images at S610. The neural network 630 outputs the rotational transformations. At S650, the transformations output at S610 are applied to a representative frame used as the basis of the three-dimensional reconstruction. The three-dimensional reconstruction may be optimized by selecting minimal distances for movement of three-dimensional points.

In FIG. 6, as a trained machine learning model, the neural network 630 is configured to estimate three-dimensional transformations or deformation vector fields that allow deformation of a reference model. The reference model may be a model of a heart or coronary tree, and may be deformed to generate the three-dimensional representation of the coronary tree as a patient-specific three-dimensional representation of the coronary tree.

In some embodiments, the coronary tree may be reconstructed using a parameterized model of the three-dimensional coronary tree relative to constraints of surface features in a synthetic model of a heart to which the coronary tree in the sequence of two-dimensional angiogram images is fitted. The constraints of surface features in a synthetic model of a heart may be used in various of the embodiments described herein, including the embodiments of FIG. 4, FIG. 5, and FIG. 6.

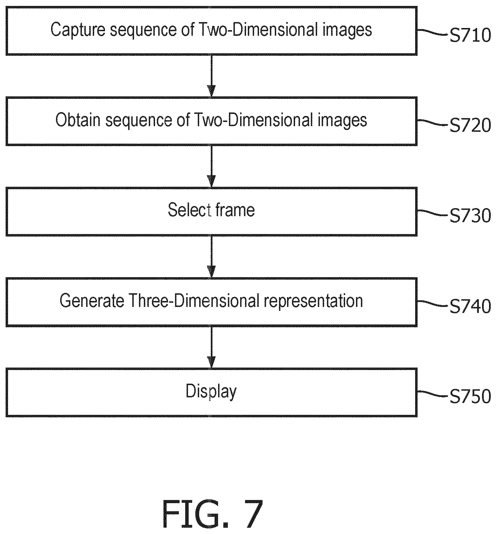

FIG. 7 illustrates a method for three-dimensional coronary tree reconstruction, in accordance with a representative embodiment.

At S710, an imaging system 101 captures a sequence of two-dimensional images of anatomical structure (e.g., heart) from a single viewpoint corresponding to a single acquisition position of the imaging system 101 in FIG. 1. As described herein, the imaging system 101 may be an X-ray device, and in some embodiments, the imaging system 101 may include a C-arm X-ray device with a single detector.

At S720, a controller (e.g., a processor, such as computer 140) receives the sequence of two-dimensional images from the imaging system 101. In some embodiments, the controller segments and/or labels vessels in the coronary tree of the anatomical structure included in the two-dimensional angiogram images.

At S730, the controller selects a reference frame from the sequence of two-dimensional images for reconstructing a three-dimensional representation of the anatomical structure (e.g., coronary tree of the anatomical structure). For example, the first frame of a cardiac cycle captured in the sequence of two-dimensional image may be selected as the reference frame for reconstructing a three-dimensional representation of the coronary tree of the anatomical structure.

At S740, the controller generates and outputs a three-dimensional representation of the coronary tree. In some embodiments, based on FIG. 4, the controller may apply a trained machine-learning model to generate the three-dimensional representation of the coronary tree from the single viewpoint of the imaging device during motion of the moving coronary structure (e.g., heart) and while the two-dimensional angiogram images are captured. The machine-learning model may generate the three-dimensional representation based on cardiac movement of the anatomical structure applied to the sequence of two-dimensional images and/or the reference frame from the sequence of two dimensional images.. The trained machine-learning model may generate the three-dimensional representation of the coronary tree as a depth map comprising a pixel-by-pixel depth image. In some embodiments, the trained machine-learning model may generate the depth map as a projection image from the selected reference frame with added depth information. In some embodiments, based on FIG. 5, the trained machine-learning model may generate the three-dimensional coronary tree as a volumetric reconstruction voxel-by-voxel of the reference frame. In some embodiments, based on FIG. 6, the trained machine learning model generates the three-dimensional coronary tree by estimating three-dimensional transformations or deformation vector fields that allow deformation of a reference model of at least one of a heart or coronary tree to generate the three-dimensional representation of the coronary tree as a patient-specific three-dimensional representation of the coronary tree. In some embodiments, the coronary tree may be reconstructed using a parameterized model of the three-dimensional coronary tree relative to constraints of surface features of the coronary structure.

At S750, the controller displays the three-dimensional coronary tree. For example, the display 180 may display the three-dimensional coronary tree based on instructions executed by the processor 152 in the system 100 of FIG. 1.

FIG. 8 illustrates a computer system, on which a method for three-dimensional coronary tree reconstruction is implemented, in accordance with another representative embodiment.

Referring to FIG. 8, the computer system 800 includes a set of software instructions that can be executed to cause the computer system 800 to perform any of the methods or computer-based functions disclosed herein. The computer system 800 may operate as a standalone device or may be connected, for example, using a network 801, to other computer systems or peripheral devices. In embodiments, a computer system 800 performs logical processing based on digital signals received via an analog-to-digital converter.

In a networked deployment, the computer system 800 operates in the capacity of a server or as a client user computer in a server-client user network environment, or as a peer computer system in a peer-to-peer (or distributed) network environment. The computer system 800 can also be implemented as or incorporated into various devices, such as a workstation that includes a controller, a stationary computer, a mobile computer, a personal computer (PC), a laptop computer, a tablet computer, or any other machine capable of executing a set of software instructions (sequential or otherwise) that specify actions to be taken by that machine. The computer system 800 can be incorporated as or in a device that in turn is in an integrated system that includes additional devices. In an embodiment, the computer system 800 can be implemented using electronic devices that provide voice, video, or data communication. Further, while the computer system 800 is illustrated in the singular, the term "system" shall also be taken to include any collection of systems or sub-systems that individually or jointly execute a set, or multiple sets, of software instructions to perform one or more computer functions.

As illustrated in FIG. 8, the computer system 800 includes a processor 810. The processor 810 may be considered a representative example of a processor of a controller and executes instructions to implement some or all aspects of methods and processes described herein. The processor 810 is tangible and non-transitory. As used herein, the term "non-transitory" is to be interpreted not as an eternal characteristic of a state, but as a characteristic of a state that will last for a period. The term "non-transitory" specifically disavows fleeting characteristics such as characteristics of a carrier wave or signal or other forms that exist only transitorily in any place at any time. The processor 810 is an article of manufacture and/or a machine component. The processor 810 is configured to execute software instructions to perform functions as described in the various embodiments herein. The processor 810 may be a general-purpose processor or may be part of an application specific integrated circuit (ASIC). The processor 810 may also be a microprocessor, a microcomputer, a processor chip, a controller, a microcontroller, a digital signal processor (DSP), a state machine, or a programmable logic device. The processor 810 may also be a logical circuit, including a programmable gate array (PGA), such as a field programmable gate array (FPGA), or another type of circuit that includes discrete gate and/or transistor logic. The processor 810 may be a central processing unit (CPU), a graphics processing unit (GPU), or both. Additionally, any processor described herein may include multiple processors, parallel processors, or both. Multiple processors may be included in, or coupled to, a single device or multiple devices.

The term "processor" as used herein encompasses an electronic component able to execute a program or machine executable instruction. References to a computing device comprising "a processor" should be interpreted to include more than one processor or processing core, as in a multi-core processor. A processor may also refer to a collection of processors within a single computer system or distributed among multiple computer systems. The term computing device should also be interpreted to include a collection or network of computing devices each including a processor or processors. Programs have software instructions performed by one or multiple processors that may be within the same computing device or which may be distributed across multiple computing devices.

The computer system 800 further includes a main memory 820 and a static memory 830, where memories in the computer system 800 communicate with each other and the processor 810 via a bus 808. Either or both of the main memory 820 and the static memory 830 may be considered representative examples of a memory of a controller, and store instructions used to implement some or all aspects of methods and processes described herein. Memories described herein are tangible storage mediums for storing data and executable software instructions and are non-transitory during the time software instructions are stored therein. As used herein, the term "non-transitory" is to be interpreted not as an eternal characteristic of a state, but as a characteristic of a state that will last for a period. The term "non-transitory" specifically disavows fleeting characteristics such as characteristics of a carrier wave or signal or other forms that exist only transitorily in any place at any time. The main memory 820 and the static memory 830 are articles of manufacture and/or machine components. The main memory 820 and the static memory 830 are computer-readable mediums from which data and executable software instructions can be read by a computer (e.g., the processor 810). Each of the main memory 820 and the static memory 830 may be implemented as one or more of random access memory (RAM), read only memory (ROM), flash memory, electrically programmable read only memory (EPROM), electrically erasable programmable read-only memory (EEPROM), registers, a hard disk, a removable disk, tape, compact disk read only memory (CD-ROM), digital versatile disk (DVD), floppy disk, blu-ray disk, or any other form of storage medium known in the art. The memories may be volatile or non-volatile, secure and/or encrypted, unsecure and/or unencrypted.

"Memory" is an example of a computer-readable storage medium. Computer memory is any memory which is directly accessible to a processor. Examples of computer memory include, but are not limited to RAM memory, registers, and register files. References to "computer memory" or "memory" should be interpreted as possibly being multiple memories. The memory may for instance be multiple memories within the same computer system. The memory may also be multiple memories distributed amongst multiple computer systems or computing devices.

As shown, the computer system 800 further includes a video display unit 850, such as a liquid crystal display (LCD), an organic light emitting diode (OLED), a flat panel display, a solid-state display, or a cathode ray tube (CRT), for example. Additionally, the computer system 800 includes an input device 860, such as a keyboard/virtual keyboard or touch-sensitive input screen or speech input with speech recognition, and a cursor control device 870, such as a mouse or touch-sensitive input screen or pad. The computer system 800 also optionally includes a disk drive unit 880, a signal generation device 890, such as a speaker or remote control, and/or a network interface device 840.

In an embodiment, as depicted in FIG. 8, the disk drive unit 880 includes a computer-readable medium 882 in which one or more sets of software instructions 884 (software) are embedded. The sets of software instructions 884 are read from the computer-readable medium 882 to be executed by the processor 810. Further, the software instructions 884, when executed by the processor 810, perform one or more steps of the methods and processes as described herein. In an embodiment, the software instructions 884 reside all or in part within the main memory 820, the static memory 830 and/or the processor 810 during execution by the computer system 800. Further, the computer-readable medium 882 may include software instructions 884 or receive and execute software instructions 884 responsive to a propagated signal, so that a device connected to a network 801 communicates voice, video or data over the network 801. The software instructions 884 may be transmitted or received over the network 801 via the network interface device 840.

In an embodiment, dedicated hardware implementations, such as application-specific integrated circuits (ASICs), field programmable gate arrays (FPGAs), programmable logic arrays and other hardware components, are constructed to implement one or more of the methods described herein. One or more embodiments described herein may implement functions using two or more specific interconnected hardware modules or devices with related control and data signals that can be communicated between and through the modules. Accordingly, the present disclosure encompasses software, firmware, and hardware implementations. Nothing in the present application should be interpreted as being implemented or implementable solely with software and not hardware such as a tangible non-transitory processor and/or memory.

In accordance with various embodiments of the present disclosure, the methods described herein may be implemented using a hardware computer system that executes software programs. Further, in an exemplary, non-limited embodiment, implementations can include distributed processing, component/object distributed processing, and parallel processing. Virtual computer system processing may implement one or more of the methods or functionalities as described herein, and a processor described herein may be used to support a virtual processing environment.

Accordingly, three-dimensional coronary tree reconstruction enables reconstruction of a three-dimensional representation of the coronary tree in a selected frame from a sequence of two-dimensional angiogram images from a single viewpoint. The ability to use a sequence of two-dimensional angiogram images from a single viewpoint corresponding to a single acquisition position reduced radiation exposure, facility time, and operator and equipment requirements, among other efficiencies realized by the teachings herein.

The illustrations of the embodiments described herein are intended to provide a general understanding of the structure of the various embodiments. The illustrations are not intended to serve as a complete description of all of the elements and features of the disclosure described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

## Claims

1. A controller (150) for generating a three-dimensional image of a coronary tree (449), the controller comprising:
a processor (152) and memory (151), the processor (152) configured to:
obtain a sequence of two-dimensional angiogram images (410) corresponding to a moving coronary structure from a single viewpoint of an imaging device; and
simulate a plurality of different viewpoints of the coronary structure based on the sequence of the two-dimensional angiogram images (410) and cardiac motion of the moving coronary structure; and
generate a three-dimensional representation of a coronary tree (449) of the coronary structure based on the plurality of different simulated viewpoints.

2. The controller (150) of claim 1, wherein the processor (152) is configured to apply a trained machine-learning model (430) to generate the three-dimensional representation of the coronary tree (449), and wherein the trained machine-learning models is configured to receive as input the sequence of two-dimensional angiogram images (410) and generate the three-dimensional representation of the coronary tree (449) based on the cardiac motion of the moving coronary structure.

3. The controller (150) of claim 1, wherein the imaging device comprises an X-ray device, and wherein the sequence of two-dimensional angiogram images (410) is captured from a single viewpoint without moving the X-ray device.

4. The controller (150) of claim 1, wherein the controller is further configured to:
select a frame of the sequence of two-dimensional angiogram images (410);
obtain a projection image of the selected frame;
add depth information to the projection image based on information in the sequence of two-dimensional angiogram images and the motion of the moving coronary structure to generate the three-dimensional representation of the coronary tree as a depth map; and
output a depth map comprising a pixel-by-pixel depth image which adds depth information to a projection image from the selected frame.

5. The controller (150) of claim 4 , wherein the depth map comprises a pixel-by-pixel depth image of the coronary tree.

6. The controller (150) of claim 2 , wherein the trained machine learning model (430) outputs the three-dimensional representation (211A) of the coronary tree (449) as a volumetric reconstruction voxel-by-voxel for the selected frame.

7. The controller (150) of claim 2 , wherein the trained machine learning model (430) is configured to estimate three-dimensional transformations or deformation vector fields that deforms a reference model of at least one of the coronary structure or the coronary tree (449) to generate the three-dimensional representation (211A) of the coronary tree (449).

8. The controller (150) of claim 1, wherein the processor is further configured to reconstruct the coronary tree (449) using a parameterized model of the three-dimensional representation (211A) of the coronary tree (449) relative to constraints of surface features in a synthetic model of a heart to which the coronary tree (449) in the sequence of two-dimensional angiogram images (410) is fitted.

9. The controller (150) of claim 1, wherein the processor is further configured to:
display (180) the three-dimensional representation (211A) of the coronary tree (449) on a display (180).

10. The controller (150) of claim 1, wherein the processor is further configured to:
segment and label vessels in the two-dimensional angiogram images (410); and
generate the three-dimensional representation of a coronary tree (449) of the coronary structure based on the segmented and labeled vessels in the two-dimensional angiogram images.

11. A non-transitory computer-readable storage medium having stored a computer program comprising instructions, which, when executed by a processor, cause the processor to:
obtain a sequence of two-dimensional angiogram images (410) corresponding to a moving coronary structure from a single viewpoint of an imaging device; and
simulate a plurality of different viewpoints of the coronary structure based on the sequence of the two-dimensional angiogram images (410) and cardiac motion of the moving coronary structure; and
generate a three-dimensional representation of a coronary tree (449) of the coronary structure based on the plurality of different simulated viewpoints.

12. A method for generating a three-dimensional image of a coronary tree (449), comprising:
obtaining a sequence of two-dimensional angiogram images (410) corresponding to a moving coronary structure from a single viewpoint of an imaging device; and
simulating a plurality of different viewpoints of the coronary structure based on the sequence of the two-dimensional angiogram images (410) and cardiac motion of the moving coronary structure; and
generating a three-dimensional representation of a coronary tree (449) of the coronary structure based on the plurality of different simulated viewpoints.

13. The method of claim 12, further comprising:
inputting, to a trained machine learning model (430), the sequence of two-dimensional angiogram images (410); and
outputting, by the trained machine learning model (430), a reconstruction of the three-dimensional representation (211A) of the coronary tree (449).

14. The method of claim 13, further comprising:
inputting, to the trained machine learning model (430), the sequence of two-dimensional angiogram images (410); and
outputting, by the trained machine learning model (430), a depth map comprising a pixel-by-pixel depth image which adds depth information to a projection image from the selected frame.

15. The method of claim 13, further comprising:
inputting, to the trained machine learning model (430), the sequence of two-dimensional angiogram images (410); and
outputting, by the trained machine learning model (430), the three-dimensional representation (211A) of the coronary tree (449) as a volumetric reconstruction voxel-by-voxel for the selected frame.

## Patentansprüche

1. Steuereinheit (150) zum Erzeugen eines dreidimensionalen Bildes eines Koronarbaums (449), wobei die Steuereinheit umfasst:
einen Prozessor (152) und einen Speicher (151), wobei der Prozessor (152) konfiguriert ist:
eine Sequenz zweidimensionaler Angiogrammbilder (410), die einer sich bewegenden Koronarstruktur entsprechen, aus einer einzigen Perspektive einer Bildgebungsvorrichtung zu erhalten; und
eine Vielzahl unterschiedlicher Perspektiven der Koronarstruktur auf Grundlage der Sequenz der zweidimensionalen Angiogrammbilder (410) und einer Herzbewegung der sich bewegenden Koronarstruktur zu simulieren; und
eine dreidimensionale Darstellung eines Koronarbaums (449) der Koronarstruktur auf Grundlage der Vielzahl unterschiedlicher simulierter Perspektiven zu erzeugen.

2. Steuereinheit (150) nach Anspruch 1, wobei der Prozessor (152) konfiguriert ist, um ein trainiertes Modell maschinellen Lernens (430) anzuwenden, um die dreidimensionale Darstellung des Koronarbaums (449) zu erzeugen, und wobei das trainierte Modell maschinellen Lernens konfiguriert ist, um als Eingabe die Sequenz von zweidimensionalen Angiogrammbildern (410) zu empfangen und die dreidimensionale Darstellung des Koronarbaums (449) auf Grundlage der Herzbewegung der sich bewegenden Koronarstruktur zu erzeugen.

3. Steuereinheit (150) nach Anspruch 1, wobei die Bildgebungsvorrichtung eine Röntgenvorrichtung umfasst und wobei die Sequenz zweidimensionaler Angiogrammbilder (410) von einer einzigen Perspektive aus aufgenommen wird, ohne die Röntgenvorrichtung zu bewegen.

4. Steuereinheit (150) nach Anspruch 1, wobei die Steuereinheit weiter konfiguriert ist:
ein Einzelbild aus der Sequenz zweidimensionaler Angiogrammbilder (410) auszuwählen;
ein Projektionsbild des ausgewählten Einzelbildes zu erhalten;
Tiefeninformationen zu dem Projektionsbild auf Grundlage von Informationen in der Sequenz zweidimensionaler Angiogrammbilder und der Bewegung der sich bewegenden Koronarstruktur hinzuzufügen, um die dreidimensionale Darstellung des Koronarbaums als eine Tiefenkarte zu erzeugen; und
eine Tiefenkarte auszugeben, die ein Pixel-für-Pixel-Tiefenbild umfasst, das zu einem Projektionsbild aus dem ausgewählten Einzelbild Tiefeninformationen hinzufügt.

5. Steuereinheit (150) nach Anspruch 4, wobei die Tiefenkarte ein Pixel-für-Pixel-Tiefenbild des Koronarbaums umfasst.

6. Steuereinheit (150) nach Anspruch 2, wobei das trainierte Modell maschinellen Lernens (430) die dreidimensionale Darstellung (211A) des Koronarbaums (449) als eine volumetrische Voxel-für-Voxel-Rekonstruktion für das ausgewählte Einzelbild ausgibt.

7. Steuereinheit (150) nach Anspruch 2, wobei das trainierte Modell maschinellen Lernens (430) konfiguriert ist, um dreidimensionale Transformationen oder Deformationsvektorfelder zu schätzen, die ein Referenzmodell mindestens eines von der Koronarstruktur oder dem Koronarbaum (449) deformieren, um die dreidimensionale Darstellung (211A) des Koronarbaums (449) zu erzeugen.

8. Steuereinheit (150) nach Anspruch 1, wobei der Prozessor weiter konfiguriert ist, um den Koronarbaum (449) unter Verwendung eines parametrisierten Modells der dreidimensionalen Darstellung (211A) des Koronarbaums (449) relativ zu Beschränkungen von Oberflächenmerkmalen in einem synthetischen Modell eines Herzens zu rekonstruieren, an das der Koronarbaum (449) in der Sequenz zweidimensionaler Angiogrammbilder (410) angepasst ist.

9. Steuereinheit (150) nach Anspruch 1, wobei der Prozessor weiter konfiguriert ist:
die dreidimensionale Darstellung (211A) des Koronarbaums (449) auf einer Anzeige (180) anzuzeigen (180).

10. Steuereinheit (150) nach Anspruch 1, wobei der Prozessor weiter konfiguriert ist:
Gefäße in den zweidimensionalen Angiogrammbildern (410) zu segmentieren und zu beschriften; und
die dreidimensionale Darstellung eines Koronarbaums (449) der Koronarstruktur auf Grundlage der segmentierten und beschrifteten Gefäße in den zweidimensionalen Angiogrammbildern zu erzeugen.

11. Nichtflüchtiges, computerlesbares Speichermedium, das ein Computerprogramm gespeichert aufweist, das Anweisungen umfasst, die, wenn sie von einem Prozessor ausgeführt werden, den Prozessor veranlassen:
eine Sequenz zweidimensionaler Angiogrammbilder (410), die einer sich bewegenden Koronarstruktur entsprechen, aus einer einzigen Perspektive einer Bildgebungsvorrichtung zu erhalten; und
eine Vielzahl unterschiedlicher Perspektiven der Koronarstruktur auf Grundlage der Sequenz der zweidimensionalen Angiogrammbilder (410) und einer Herzbewegung der sich bewegenden Koronarstruktur zu simulieren; und
eine dreidimensionale Darstellung eines Koronarbaums (449) der Koronarstruktur auf Grundlage der Vielzahl unterschiedlicher simulierter Perspektiven zu erzeugen.

12. Verfahren zum Erzeugen eines dreidimensionalen Bildes eines Koronarbaums (449), umfassend:
Erhalten einer Sequenz zweidimensionaler Angiogrammbilder (410), die einer sich bewegenden Koronarstruktur entsprechen, aus einer einzigen Perspektive einer Bildgebungsvorrichtung; und
Simulieren einer Vielzahl unterschiedlicher Perspektiven der Koronarstruktur auf Grundlage der Sequenz der zweidimensionalen Angiogrammbilder (410) und einer Herzbewegung der sich bewegenden Koronarstruktur; und
Erzeugen einer dreidimensionalen Darstellung eines Koronarbaums (449) der Koronarstruktur auf Grundlage der Vielzahl unterschiedlicher simulierter Perspektiven.

13. Verfahren nach Anspruch 12, weiter umfassend:
Eingeben der Sequenz zweidimensionaler Angiogrammbilder (410) in ein trainiertes Modell maschinellen Lernens (430); und
Ausgeben, durch das trainierte Modell maschinellen Lernens (430), einer Rekonstruktion der dreidimensionalen Darstellung (211A) des Koronarbaums (449).

14. Verfahren nach Anspruch 13, weiter umfassend:
Eingeben der Sequenz zweidimensionaler Angiogrammbilder (410) in das trainierte Modell maschinellen Lernens (430); und
Ausgeben, durch das trainierte Modell maschinellen Lernens (430), einer Tiefenkarte, die ein Pixel-für-Pixel-Tiefenbild umfasst, das zu einem Projektionsbild aus dem ausgewählten Einzelbild Tiefeninformationen hinzufügt.

15. Verfahren nach Anspruch 13, weiter umfassend:
Eingeben der Sequenz zweidimensionaler Angiogrammbilder (410) in das trainierte Modell maschinellen Lernens (430); und
Ausgeben, durch das trainierte Modell maschinellen Lernens (430), der dreidimensionalen Darstellung (211A) des Koronarbaums (449) als eine volumetrische Voxel-für-Voxel-Rekonstruktion für das ausgewählte Einzelbild.

## Revendications

1. Contrôleur (150) pour générer une image tridimensionnelle d'un arbre coronaire (449), le contrôleur comprenant :
un processeur (152) et une mémoire (151), le processeur (152) étant configuré pour :
obtenir une séquence d'images angiographiques bidimensionnelles (410) correspondant à une structure coronaire en mouvement à partir d'un seul point de vue d'un dispositif d'imagerie ; et
simuler une pluralité de points de vue différents de la structure coronaire sur la base de la séquence des images angiographiques bidimensionnelles (410) et du mouvement cardiaque de la structure coronaire en mouvement ; et
générer une représentation tridimensionnelle d'un arbre coronaire (449) de la structure coronaire sur la base de la pluralité de points de vue différents simulés.

2. Contrôleur (150) selon la revendication 1, dans lequel le processeur (152) est configuré pour appliquer un modèle d'apprentissage automatique entraîné (430) pour générer la représentation tridimensionnelle de l'arbre coronaire (449) et dans lequel les modèles d'apprentissage automatique entraînés sont configurés pour recevoir en tant qu'entrée la séquence d'images angiographiques bidimensionnelles (410) et générer la représentation tridimensionnelle de l'arbre coronaire (449) sur la base du mouvement cardiaque de la structure coronaire en mouvement.

3. Contrôleur (150) selon la revendication 1, dans lequel le dispositif d'imagerie comprend un appareil à rayons X et dans lequel la séquence d'images angiographiques bidimensionnelles (410) est capturée à partir d'un seul point de vue sans déplacer l'appareil à rayons X.

4. Contrôleur (150) selon la revendication 1, dans lequel le contrôleur est en outre configuré pour :
sélectionner une trame de la séquence d'images angiographiques bidimensionnelles (410) ;
obtenir une image de projection de la trame sélectionnée ;
ajouter des informations de profondeur à l'image de projection sur la base des informations dans la séquence d'images angiographiques bidimensionnelles et du mouvement de la structure coronaire en mouvement pour générer la représentation tridimensionnelle de l'arbre coronaire en tant que carte de profondeur ; et
produire une carte de profondeur comprenant une image de profondeur pixel par pixel qui ajoute des informations de profondeur à une image de projection de la trame sélectionnée.

5. Contrôleur (150) selon la revendication 4, dans lequel la carte de profondeur comprend une image de profondeur pixel par pixel de l'arbre coronaire.

6. Contrôleur (150) selon la revendication 2, dans lequel le modèle d'apprentissage automatique entraîné (430) affiche la représentation tridimensionnelle (211A) de l'arbre coronaire (449) en tant que reconstruction volumétrique voxel par voxel pour la trame sélectionnée.

7. Contrôleur (150) selon la revendication 2, dans lequel le modèle d'apprentissage automatique entraîné (430) est configuré pour estimer des transformations tridimensionnelles ou des champs de vecteurs de déformation qui déforment un modèle de référence d'au moins une des structures coronaires ou de l'arbre coronaire (449) pour générer la représentation tridimensionnelle (211A) de l'arbre coronaire (449).

8. Contrôleur (150) selon la revendication 1, dans lequel le processeur est en outre configuré pour reconstruire l'arbre coronaire (449) à l'aide d'un modèle paramétré de la représentation tridimensionnelle (211A) de l'arbre coronaire (449) par rapport à des contraintes de caractéristiques de surface dans un modèle synthétique d'un cœur auquel l'arbre coronaire (449) dans la séquence d'images angiographiques bidimensionnelles (410) est ajusté.

9. Contrôleur (150) selon la revendication 1, dans lequel le processeur est en outre configuré pour :
afficher (180) la représentation tridimensionnelle (211A) de l'arbre coronaire (449) sur un écran (180).

10. Contrôleur (150) de la revendication 1, dans lequel le processeur est en outre configuré pour :
segmenter et étiqueter des vaisseaux dans les images angiographiques bidimensionnelles (410) ; et
générer la représentation tridimensionnelle d'un arbre coronaire (449) de la structure coronaire sur la base des vaisseaux segmentés et étiquetés dans les images angiographiques bidimensionnelles.

11. Support de stockage non transitoire lisible par ordinateur présentant un programme informatique stocké comprenant des instructions qui, lorsqu'elles sont exécutées par un processeur, amènent le processeur à :
obtenir une séquence d'images angiographiques bidimensionnelles (410) correspondant à une structure coronaire en mouvement à partir d'un seul point de vue d'un dispositif d'imagerie ; et
simuler une pluralité de points de vue différents de la structure coronaire sur la base de la séquence des images angiographiques bidimensionnelles (410) et du mouvement cardiaque de la structure coronaire en mouvement ; et
générer une représentation tridimensionnelle d'un arbre coronaire (449) de la structure coronaire sur la base de la pluralité de points de vue différents simulés.

12. Procédé pour générer une image tridimensionnelle d'un arbre coronaire (449), comprenant :
l'obtention d'une séquence d'images angiographiques bidimensionnelles (410) correspondant à une structure coronaire en mouvement à partir d'un seul point de vue d'un dispositif d'imagerie ; et
la simulation une pluralité de points de vue différents de la structure coronaire sur la base de la séquence d'images angiographiques bidimensionnelles (410) et du mouvement cardiaque de la structure coronaire en mouvement ; et
la génération d'une représentation tridimensionnelle d'un arbre coronaire (449) de la structure coronaire sur la base de la pluralité de points de vue différents simulés.

13. Procédé selon la revendication 12, comprenant en outre :
la fourniture, à un modèle d'apprentissage automatique entraîné (430), de la séquence d'images angiographiques bidimensionnelles (410) ; et
la production, par le modèle d'apprentissage automatique entraîné (430), d'une reconstruction de la représentation tridimensionnelle (211A) de l'arbre coronaire (449).

14. Procédé selon la revendication 13, comprenant en outre :
la fourniture, au modèle d'apprentissage automatique entraîné (430), de la séquence d'images d'angiographie bidimensionnelles (410) ; et
la production, par le modèle d'apprentissage automatique entraîné (430), d'une carte de profondeur comprenant une image de profondeur pixel par pixel qui ajoute des informations de profondeur à une image de projection de la trame sélectionnée.

15. Procédé selon la revendication 13, comprenant en outre :
la fourniture, au modèle d'apprentissage automatique entraîné (430), de la séquence d'images angiographiques bidimensionnelles (410) ; et
la production, par le modèle d'apprentissage automatique entraîné (430), de la représentation tridimensionnelle (211A) de l'arbre coronaire (449) en tant que reconstruction volumétrique voxel par voxel pour la trame sélectionnée.
